# EUROPÄISCHE PATENTSCHRIFT

(11) **EP 1 283 971 B1**
(45) Veröffentlichungstag und Bekanntmachung des Hinweises auf die Patenterteilung: **30.11.2005**
(21) Anmeldenummer: 01943433.1
(22) Anmeldetag: 22.05.2001
(51) Int. Cl.: F16N 13/20, F04C 15/04

(54) **GEREGELTE PUMPE**
REGULATED PUMP
POMPE REGULEE

(30) Priorität: 25.05.2000 DE 10025723
(43) Veröffentlichungstag der Anmeldung: 19.02.2003
(73) Patentinhaber: GKN Sinter Metals GmbH, 42477 Radevormwald (DE)
(72) Erfinder: BACHMANN, Josef, 97791 Obersinn (DE)
(74) Vertreter: Maxton Langmaack & Partner
(86) Internationale Anmeldenummer: PCT/EP2001/005902
(87) Internationale Veröffentlichungsnummer: WO 2001/090632

(56) Entgegenhaltungen:
- EP-A- 0 301 886
- DE-A- 2 460 968
- DE-A- 19 646 359
- FR-A- 2 667 676
- FR-A- 2 706 541

## Beschreibung

Die Erfindung betrifft eine Pumpe, insbesondere Ölpumpe für Verbrennungsmotoren, mit einem Zahnring- oder Rotorsatz, mit jeweils einer in einem Pumpengehäuse angeordneten Druck- und Saugtasche, die durch einen eine Förderkammer begrenzenden axial verschiebbaren Steuerkolben voneinander trennbar sind und einem das Pumpengehäuse verschließenden Gehäusedeckel, wobei die Drucktasche einen Druckkanal aufweist, der mit dem Bund des Steuerkolbens in Verbindung steht.

Die Entwicklung von Automobilen mit niedrigen Kraftstoffverbräuchen erfordert die Optimierung von Fahrzeug- und Motorenkomponenten. Für den Kraftfahrzeugenergieverbrauch im häufig auftretenden Kurzstrecken- und Stadtverkehr sind hierbei die Verluste, die unter anderem durch den Antrieb von Nebenaggregaten bedingt sind, von besonderer Bedeutung. Die Antriebsleistung von unter anderem Ölpumpen, die die Motorschmierung sicherstellen, können zu einer Verringerung der eigentlichen Motorleistung führen, wodurch der Kraftstoffverbrauch stark ansteigt.

Bei bis zu minus 40° C muß die Funktion der Motorschmierung und eine ausreichend schnelle Motorschmierung gewährleistet werden und im heißen Leerlaufbetrieb bis zu 160° C darf die Ölversorgung keinen Mangel aufweisen. Der Heißleerlaufbetrieb ist gekennzeichnet durch hohe innere Leckagen der Ölpumpe und einen relativ hohen Ölbedarf des Motors. Der Heißleerlaufbetrieb ist ein wesentlicher Betriebspunkt für die Dimensionierung der Ölpumpe.

Im allgemeinen wird bei der klassischen Pumpenauslegung die Ölpumpe für diesen Betriebspunkt ausgelegt. Im normalen Fahrzeugbetrieb führt dies zu einer überdimensionierten Ölpumpe, da die Ölschlucklinie des Verbrennungsmotors degressiv über die Drehzahl verläuft, wobei die Förderkennlinie der Ölpumpe näherungsweise linear mit der Drehzahl ansteigt. Das hieraus resultierende Überangebot an Öl wird über ein Überdruckbegrenzungsventil energieverzehrend abgeblasen.

Aus der DE-A-196 46 359 ist eine über den volumetrischen wirkungsgrad gesteuerte Schmierölpumpe bekannt, die eine verbesserte Anpassung der Förderkennlinie der Ölpumpe an die Ölschlucklinie eines Verbrennungsmotors ermöglicht, da nach dem Überschreiten eines Grenzdrucks in der Drucktasche ein mit der Druckfeder vorgespannter Kolben, der die Drucktasche von der Saugtasche trennt, zurückgeschoben wird, so daß ein Axialspiel entsteht, welches einen Druckausgleich von der Drucktasche zur Saugtasche ermöglicht. Hierdurch erfolgt eine Reduzierung des Fördervolumens und des Drucks, so daß die Förderkennlinie der Ölpumpe an die Ölschlucklinie des Motors angenähert wird.

Aufgabe der Erfindung ist es, eine Pumpe zu bilden, die eine genauere Anpassung der Förderkennlinie der Pumpe an die Ölschlucklinie des Motors ermöglicht. Insbesondere bei steigender Drehzahl soll der Druck und der Volumenstrom der Pumpe ab einem Regelpunkt nahezu konstant gehalten werden. Ferner soll die Pumpe eine geringere Leistungsaufnahme aufweisen.

Die Aufgabe wird erfindungsgemäß dadurch gelöst, daß der Steuerkolben an seinem der Förderkammer abgewandten Ende mit einem rechtwinkligen zum Steuerkolben angeordneten Federbolzen zusammenwirkt, wobei der Federbolzen mit einer Druckfeder gegen den Steuerkolben vorgespannt ist, und der Steuerkolben und Federbolzen über eine winklig zur Steuerkolbenachse angeordneten Gleitfläche in Verbindung steht.

Der Vorteil der Erfindung besteht darin, daß durch die schräge Fläche ein bestimmtes Wegverhältnis zwischen Steuerkolben und Federbolzen vorgegeben werden kann. Der Druck und das Fördervolumen der Pumpe steigen bis zum Regelpunkt nahezu linear an. Ab einer Grenzdrehzahl des Regelpunkts ist es wünschenswert, wenn der Druck und das Fördervolumen nahezu konstant über die Drehzahl bleiben. Weitere Vorteile der erfindungsgemäßen Pumpe sind, daß die Pulsation reduziert wird, und daß eine geringere Verschäumung des Mediums, d. h. insbesondere des Öls, auftritt.

Erfindungsgemäß ist daher vorgesehen, daß durch die vorgespannte Druckfeder des Federbolzens der Regelpunkt der Pumpe eingestellt wird. Bei einem Überschreiten der Grenzdrehzahl wird gleichzeitig auch ein Grenzdruck überschritten, wobei der Druck über das Fördermedium von der Drucktasche durch den Druckregelkanal gegen den Bund des Steuerkolbens drückt und diesen gegen die Druckfeder zurückbewegt. Durch das Zurückziehen des Steuerkolbens wird das Axialspiel vergrößert.

Gleichzeitig ist vorgesehen, daß der Gehäusedeckel einen Druckkanal aufweist, der die Drucktasche und die Förderkammer verbindet. Über den in den Pumpendeckel eingearbeiteten Druckkanal wird die Förderkammer gezielt mit Druck beaufschlagt. Dadurch wird die zuvor im Saugbereich gefüllte Förderkammer gezielt mit Fördermedium aus der Drucktasche über den Druckkanal ersetzt und das überschüssige Fördermedium kann über das vergrößerte Axialspiel, d. h. einem Zurückziehen des Steuerkolbens, ohne Widerstand in den Saugbereich zurückfließen, oder gleich im Saugbereich verbleiben. Zusätzlich kann das Fördermedium direkt über das vergrößerte Axialspiel vom Druckbereich in den Saugbereich zurückfließen.

Hierdurch wird gleichzeitig der Wirkungsgrad der Pumpe verringert, wobei der Druck und Volumenstrom gleich bleiben. Die Voraussetzung ist, daß die Rückzugslänge des Steuerkolbens, welche der Vergrößerung des Axialspiels entspricht, und somit eine Reduzierung des Wirkungsgrades der Pumpe, in einem bestimmten Verhältnis stehen sollte, wobei die Rückzugslänge des Steuerkolbens größer sein sollte als der Federweg der Druckfeder, um dem Druck und Volumenstrom ab dem Regelpunkt konstant zu halten.

In dem der Steuerkolben eine schräge Fläche im Winkel von 30° zur Steuerkolbenachse und der Federbolzen eine schräge Fläche im Winkel von 60° zur Federbolzenachse aufweist, kann ein Wegverhältnis von 2:1 eingestellt werden. Zweckmäßig ist es, wenn der Winkel α zwischen der schrägen Fläche des Steuerkolbens und der Steuerkolbenachse einen Wert von 10° bis 80° aufweist und der Winkel β zwischen der schrägen Fläche des Federbolzens und der Federbolzenachse dementsprechend einen Winkel von 90° - α. Durch eine entsprechende Ausbildung der Schräge des Steuerkolbens und Federbolzens läßt sich somit ein beliebiges Wegverhältnis und damit ein angepaßtes Regelverhalten der Pumpe erzielen.

In vorteilhafter Ausgestaltung der Erfindung ist vorgesehen, daß die Gleitfläche als Kurve ausgebildet ist. Durch eine entsprechende Ausgestaltung der Kurve wird eine weitere Verbesserung des Regelverhaltens erzielt, die Fläche des Steuerkolbens kann beispielsweise konvex ausgebildet sein, so daß mit steigender Drehzahl eine überproportionale Vergrößerung des Axialspiels erfolgt und somit die Förderkennlinie optimal an die Ölschluckkennlinie des Motors angepaßt werden kann.

In weiterer vorteilhafter Ausgestaltung der Erfindung ist vorgesehen, daß der Steuerkolben an seinem der Förderkammer abgewandten Ende gegen eine Feder mit nicht-linearer Federkennlinie wirkt. Zweckmäßig ist es, wenn die Feder eine degressive Federkennlinie aufweist. Während eine zylindrische Druckfeder eine progressiv gerade steigende Kennlinie aufweist, kann durch den Einsatz einer Feder mit nicht-linearer Federkennlinie, insbesondere degressiver Federkennlinie, die Vergrößerung des Axialspiels bei steigender Drehzahl und somit steigendem Druck verbessert werden.

In zweckmäßiger Ausgestaltung der Erfindung ist vorgesehen, daß die Feder als Wippfeder oder Tellerfeder ausgebildet ist. Die Gestaltungsmöglichkeiten der Wippfeder sind sehr groß, so daß eine genaue Anpassung des Regelverhaltens möglich ist. Ein weiterer Vorteil ist, daß durch den Einsatz einer Wipp- oder Tellerfeder eine flache und platzsparende Bauweise der Pumpe ermöglicht wird. Weitere Arten von Federn, die einen ähnlichen Verlauf der Federkennlinie haben, können ebenfalls eingesetzt werden.

In vorteilhafter Ausgestaltung der Erfindung ist vorgesehen, daß der Steuerkolben eine Ringnut aufweist, die in einer zurückgezogenen Stellung mit Bypasskanälen in Verbindung steht, die von der Druck- und Saugtasche ausgehen. Der Bypass ist in der Ausgangsstellung des Steuerkolbens geschlossen. Nach dem Überschreiten des Grenzdrucks wird der Steuerkolben zurückgezogen, bis zu einem bestimmten Zeitpunkt die auf der Umfangsfläche des Steuerkolbens angeordnete Ringnut mit den von der Drucktasche und der Saugtasche ausgehenden Bypasskanälen in Verbindung steht, so daß das Fördermedium ohne Widerstand vom Druckbereich in den Niederdruckbereich, d. h. die Saugtasche, zurückfließen kann. Hierdurch wird der volumetrische Wirkungsgrad der Pumpe zusätzlich gewollt negativ beeinflußt.

In weiterer vorteilhafter Ausgestaltung der Erfindung ist vorgesehen, daß der Gehäusedeckel einen Druckkanal aufweist, der die Drucktasche und die Förderkammer verbindet. Über den in den Pumpendeckel eingearbeiteten Druckkanal kann die Förderkammer gezielt mit Druck beaufschlagt werden. Der Druckkanal verbindet die Drucktasche mit der Förderkammer, wodurch die Förderkammer zum Teil mit Fördermedium aus der Drucktasche aufgefüllt wird, wodurch bei vergrößertem Axialspiel, d. h. einem Zurückziehen des Steuerkolbens, das Fördermedium ohne Widerstand in den Saugbereich zurückfließen kann oder gleich im Saugbereich verbleibt. Das bedeutet, daß nur soviel Fördermedium gefördert wird, wie nach der Ölschluckkennlinie des Motors benötigt wird.

In zweckmäßiger Ausgestaltung der Erfindung ist vorgesehen, daß der Druckkanal, der die Drucktasche und die Förderkammer verbindet, absperrbar bzw. regelbar ist, so daß beispielsweise der Druckkanal bis zu einer bestimmten Drehzahl geschlossen bleibt und erst anschließend ganz oder teilweise geöffnet wird, um somit einen Druckausgleich von der Drucktasche zur Förderkammer zu erreichen. Ferner ist vorgesehen, da auch der Druckregelkanal absperrbar oder regelbar ausgebildet ist.

In weiterer zweckmäßiger Ausgestaltung der Erfindung ist vorgesehen, daß der Steuerkolben eine verschleißfeste Oberfläche aufweist. Insbesondere die Dichtfläche des Steuerkolbens, die der Förderkammer zugewandt ist, kann einem hohen Verschleiß unterliegen. Dadurch entsteht eine unerwünschte Reduktion des Wirkungsgrades bei Dichtstegen konventioneller Pumpen. Durch den Federdruck des Federbolzen wird der Steuerkolben immer leicht angedrückt, wodurch eine völlige Kompensation erreicht wird.

In besonders vorteilhafter Ausgestaltung der Erfindung ist vorgesehen, daß auf jeder Seite des zahnring- oder Rotorsatzes eine Anordnung mit einem Steuerkolben vorgesehen ist. Durch die Verwendung eines weiteren Steuerkolbens auf der dem ersten Steuerkolben gegenüberliegenden Seite wird eine weitere verbesserte Regelung der Pumpe ermöglicht, da beispielsweise der zweite Steuerkolben mit einer Feder versehen sein kann, die eine andere Federkennlinie aufweist als die Feder des ersten Steuerkolbens. Weiterhin ist es möglich, daß der zweite Steuerkolben mit einer Feder versehen ist, die erst nach dem Regelpunkt wirksam wird.

Eine weitere vorteilhafte Lösung der Aufgabe wird erzielt durch eine Pumpe, insbesondere Ölpumpe für Verbrennungsmotoren, mit einem Zahnring- oder Rotorsatz, mit jeweils einer in einem Pumpengehäuse angeordneten Druck- und Saugtasche, die durch einen eine Förderkammer begrenzenden radial verschiebbaren Kulissenstein dicht voneinander trennbar sind und einem das Pumpengehäuse verschließenden Gehäusedeckel, wobei die Drucktasche einen Druckregelkanal aufweist, der mit dem Bund des Hydraulikkolbens in Verbindung steht, wobei der Hydraulikkolben an seiner der Förderkammer zugewandten Seite mit einem Kulissenstein zusammenwirkt, wobei der Hydraulikkolben mit einer Druckfeder vorgespannt ist. Es ist möglich, die vorstehend beschriebenen Verbesserungsmöglichkeiten des Regelverhaltens auch bei der Steuerung des Hydraulikkolbens vorzusehen.

Ferner ist es möglich, daß die Verschiebung des Steuerkolbens durch einen Translator/Aktuator erfolgt, wobei diese beispielsweise über einen Drucksensor oder Volumendurchflußmesser geregelt werden können und in Abhängigkeit von den ermittelten Meßwerten die Verschiebung des Steuerkolbens ermöglichen. Die Regelung kann beispielsweise in das Motormanagement oder in die Getrieberegelung integriert werden. Vorteilhaft ist, daß die Regelung über Kennlinien des Fördervolumens dem jeweiligen Bedarf des Verbrauchers der Pumpe präzise angepaßt werden kann. Beispiele für Translatoren/Aktuatoren sind elektrische Servoantriebe (Motor, Getriebe und Positionsmessung mit Rückkopplung auf die Regelung), elektromagnetische Antriebe, Piezokristallaktuatoren, thermischer Aktuator, hydraulische Stellkolben und pneumatische Zylinder.

Der Federbolzen kann in einem beliebigen Winkel zum Steuerkolben angeordnet sein. Hierbei ist eine entsprechend angepaßte Gleitfläche notwendig.

Pumpen im Sinne der Erfindung sind unter anderem Gerotor-Pumpen, Verzahnungsrotorsatzpumpen, Sichelzellenpumpen, Stirnradpumpen, Flügelzellenpumpen.

Das erfindungsgemäße Regelungssystem kann auch zur Regelung eines Hydromotors eingesetzt werden.

Die Erfindung wird anhand schematischer Zeichnungen von Ausführungsbeispielen erläutert. Es zeigen:
- Fig. 1: eine Draufsicht auf eine Pumpe,
- Fig. 2: einen Schnitt entlang der Linie A-A in Fig. 1,
- Fig. 3: eine Draufsicht auf eine erste erfindungsgemäße Ausgestaltung einer Pumpe,
- Fig. 4: einen Schnitt entlang der Linie B-B in Fig. 3 ohne Axialspiel,
- Fig. 5: einen Schnitt entlang der Linie B-B in Fig. 3 mit Axialspiel,
- Fig. 6: eine Draufsicht auf eine zweite erfindungsgemäße Ausgestaltung einer Pumpe,
- Fig. 7: einen Schnitt entlang der Linie C-C in Fig. 6 ohne Axialspiel und
- Fig. 8: einen Schnitt entlang der Linie C-C in Fig. 6 mit Axialspiel,
- Fig. 9: eine Draufsicht auf eine dritte erfindungsgemäße Ausgestaltung einer Pumpe,
- Fig. 10: einen Schnitt entlang der Linie D-D in Fig. 9 mit geschlossenem Kulissenstein,
- Fig. 11: einen Schnitt entlang der Linie D-D in Fig. 9 mit geöffnetem Kulissenstein,
- Fig. 12: einen Schnitt entlang der Linie E-E in Fig. 11.

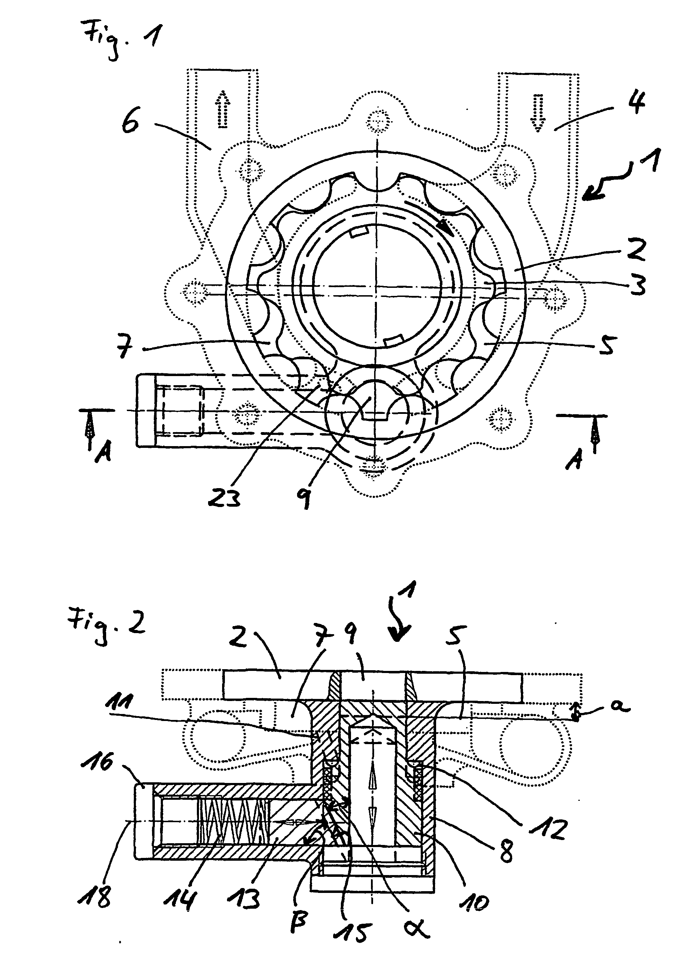

Fig. 1 zeigt eine Draufsicht auf eine Pumpe 1, insbesondere Ölpumpe für Verbrennungsmotoren, mit einem als Gerotor ausgebildeten Rotorsatz, bestehend aus einem Außenrotor 2 und einem Innenrotor 3. Die Pumpe 1 weist einen Zulauf 4 zu einer Saugtasche 5 und einen Ablauf 6 zu einer Drucktasche 7 auf. Die Taschen sind jeweils nierenförmig ausgebildet.

Fig. 2 zeigt einen Schnitt durch die erfindungsgemäße Pumpe 1 entlang der Linie A-A in Fig. 1. In einem Pumpengehäuse 8 ist eine Saugtasche 5 und eine Drucktasche 7 angeordnet. Die Saugtasche 5 und die Drucktasche 7 sind durch einen eine Förderkammer 9 begrenzenden axial verschiebbaren Steuerkolben 10 dicht voneinander getrennt. Die Drucktasche 7 weist einen Druckregelkanal 11 auf, der mit dem Bund 12 des Steuerkolbens 10 in Verbindung steht. Der Steuerkolben 10 wirkt an seinem der Förderkammer 9 abgewandten Ende mit einem rechtwinklig zum Steuerkolben 10 angeordneten Federbolzen 13 zusammen, wobei der Federbolzen 13 mit einer Druckfeder 14 gegen den Steuerkolben 10 vorgespannt ist. Der Steuerkolben 10 und der Federbolzen 13 stehen über eine winklig zur Steuerkolbenachse 17 angeordneten Gleitfläche 15 in Verbindung. Der Regelpunkt der Pumpe 1 kann durch eine entsprechende Vorspannung der Druckfeder 14 mittels der Schraube 16 eingestellt werden.

Durch den Einsatz einer schrägen Fläche 15 kann ein bestimmtes Wegverhältnis zwischen Steuerkolben 10 und Federbolzen 13 vorgegeben werden. Da ab einer Grenzdrehzahl es wünschenswert ist, daß der Druck und das Fördervolumen nahezu konstant über die Drehzahl bleiben, ist erfindungsgemäß vorgesehen, daß bei einem Überschreiten der Grenzdrehzahl, d. h. gleichzeitig eines Grenzdrucks in der Drucktasche 7 der Druck des Fördermediums von der Drucktasche 7 durch den Druckregelkanal 11 gegen den Bund 12 des Steuerkolbens 10 drückt und diesen gegen die Druckfeder 14 zurückbewegt.

Durch das Zurückziehen des Steuerkolbens 10 wird das Axialspiel a vergrößert, so daß das Fördermedium von der Drucktasche 7 zur Saugtasche 5 fließen kann. Hierdurch wird gleichzeitig der Wirkungsgrad der Pumpe 1 verringert, wobei der Druck- und Volumenstrom gleichbleiben. Die Rückzugslänge des Steuerkolbens 10, welche der Vergrößerung des Axialspiels a entspricht, kann größer sein als der Federweg der Druckfeder 14, um den Druck und den Volumenstrom ab dem Regelpunkt konstant zu halten.

Der Steuerkolben 10 weist eine schräge Fläche 15 im Winkel von 30° zur Steuerkolbenachse 17 und der Federbolzen 13 eine schräge Fläche im Winkel von 60° zur Federbolzenachse 18 auf. Hierdurch wird ein Wegverhältnis von 2:1 zwischen Steuerkolben 10 und Federbolzen 13 eingestellt. Der Winkel α zwischen der schrägen Fläche des Steuerkolbens 10 und der Steuerkol benachse 17 sollte einen Wert von 10 bis 80° aufweisen und der Winkel β zwischen der schrägen Fläche des Federbolzens 13 und der Federbolzenachse 18 dementsprechend einen Winkel von 90° - α. Durch eine entsprechende Ausbildung der Schräge des Steuerkolbens 10 und des Federbolzens 13 läßt sich somit ein beliebiges Wegverhältnis und damit ein angepaßtes Regelverhalten der Pumpe einstellen.

Eine noch genauere Auslegung des Regelverhaltens der Pumpe 1 wird dadurch erreicht, daß die Gleitfläche 15 als Kurve ausgebildet ist. Die Gleitfläche 15 des Steuerkolbens 10 kann beispielsweise konvex ausgebildet sein, so daß mit steigender Drehzahl eine überproportionale Vergrößerung des Axialspiels a erfolgt und somit die Förderkennlinie optimal an die Ölschluckkennlinie eines Motors angepaßt werden kann.

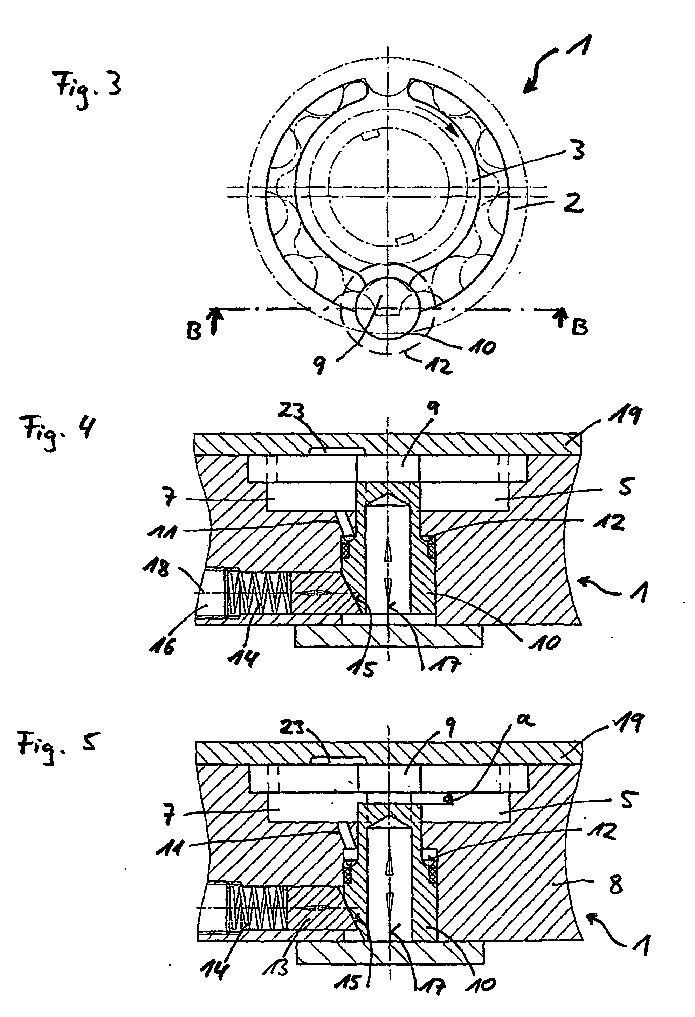

Fig. 3 zeigt eine Draufsicht auf eine Pumpe 1, insbesondere Ölpumpe für Verbrennungsmotoren, mit einem als Gerotor ausgebildeten Rotorsatz, bestehend aus einem Außenrotor 2 und einem Innenrotor 3. Der Steuerkolben 10 bzw. der Bund 12 des Steuerkolbens 10 sind durch gestrichelte Linien dargestellt. Die Förderkammer 9 wird von dem Außenrotor 2 und dem Innenrotor 3 sowie dem Steuerkolben 10 begrenzt.

Fig. 4 zeigt einen Schnitt durch eine erste erfindungsgemäße Ausgestaltung einer Pumpe 1 entlang der Linie B-B in Fig. 3. Die Druck- und Saugtasche 7, 5 sind durch einen eine Förderkammer 9 begrenzenden axial verschiebbaren Steuerkolben 10 dicht voneinander getrennt. Von der Drucktasche 7 führt ein Druckregelkanal 11 zu dem Bund 12 des Steuerkolbens 10, wobei in den Bund 12 eine Ringnut eingearbeitet ist. Der Steuerkolben 10 weist an seinem der Förderkammer 9 abgewandten Ende eine schräge Gleitfläche 15 auf, die in einem Winkel von 30° zur Steuerkolbenachse 17 angeordnet ist. In der dargestellten Stellung liegt der Druck in der Drucktasche 7 unter dem am Regelpunkt vorliegenden Grenzdruck, so daß der Steuerkolben geschlossen ist und kein Axialspiel a besteht. Der Regelpunkt der Pumpe wird durch eine Druckfeder 14 vorgegeben, die mittels einer Schraube 16 eingestellt werden kann.

Fig. 5 zeigt einen Schnitt durch eine erste Ausgestaltung der erfindungsgemäßen Pumpe 1 entlang der Linie B-B in Fig. 3. Fig. 5 zeigt den Steuerkolben 10 in einer ausgelenkten Stellung, in der ein Axialspiel a besteht. Ab einer Grenzdrehzahl, wenn der Grenzdruck in der Drucktasche 7 erreicht wird, wird die Federkraft der Druckfeder 14 überwunden, wobei der Druck des Fördermediums durch den Druckregelkanal 11 auf den Bund 12 des Steuerkolbens 10 geleitet wird. In den Bund 12 des Steuerkolbens 10 ist eine Ringnut eingearbeitet, um eine bessere Druckverteilung über die ganze Bundfläche zu erreichen. Zur Abdichtung des Steuerkolbens 10 gegen das Gehäuse 8 ist eine Dichtung vorgesehen. Wenn der Steuerkolben 10 gegen den Federbolzen 13 zurückbewegt wird, erfährt der Steuerkolben 10 aufgrund der in einem Winkel von 30° zur Steuerkolbenachse 17 angeordneten schrägen Gleitfläche 15 eine Verschiebung im Wegverhältnis 2:1 zu dem Federbolzen 13.

Durch das Axialspiel a kann Medium von der Drucktasche 7 und von der Förderkammer 9 zur Saugtasche 5 überströmen, wodurch der Wirkungsgrad der Pumpe gezielt negativ beeinflußt wird. Durch diese Maßnahme wird es erreicht, daß ab dem Regelpunkt der Druck und der Volumenstrom der Pumpe 1 annähernd konstant über die Drehzahl bleibt, wodurch die Förderkennlinie der Pumpe an die Ölschluckkennlinie eines Motors angenähert wird.

Fig. 6 zeigt eine Draufsicht auf eine Pumpe 1, insbesondere Ölpumpe für Verbrennungsmotoren, mit einem als Gerotor ausgebildeten Rotorsatz, bestehend aus einem Außenrotor 2 und einem Innenrotor 3. Der Steuerkolben 10 bzw. der Bund 12 des Steuerkolbens 10 sind durch gestrichelte Linien dargestellt.

Die Förderkammer 9 wird von dem Außenrotor 2 und dem Innenrotor 3 sowie dem Steuerkolben 10 begrenzt.

Fig. 7 zeigt einen Schnitt durch eine zweite Ausgestaltung der erfindungsgemäßen Pumpe 1 entlang der Linie C-C in Fig. 6. Die zweite Ausgestaltung der Pumpe 1 unterscheidet sich zu den Fig. 4 bis 5 dahingehend, daß der Steuerkolben 10 gegen eine Feder mit einer nicht-linearen Federkennlinie wirkt, die als Wippfeder 20 ausgebildet ist. Durch den Einsatz einer derartigen Feder mit nicht-linearer Federkennlinie, insbesondere degressiver Federkennlinie, kann die Vergrößerung des Axialspiels a bei steigender Drehzahl und somit steigendem Druck verbessert werden, wodurch eine größere Annäherung der Förderkennlinie der Pumpe an die Ölschluckkennlinie des Motors erfolgt. Vorteilhaft ist diese Ausgestaltung auch dahingehend, daß eine flache und platzsparende Bauweise der Pumpe 1 ermöglicht wird.

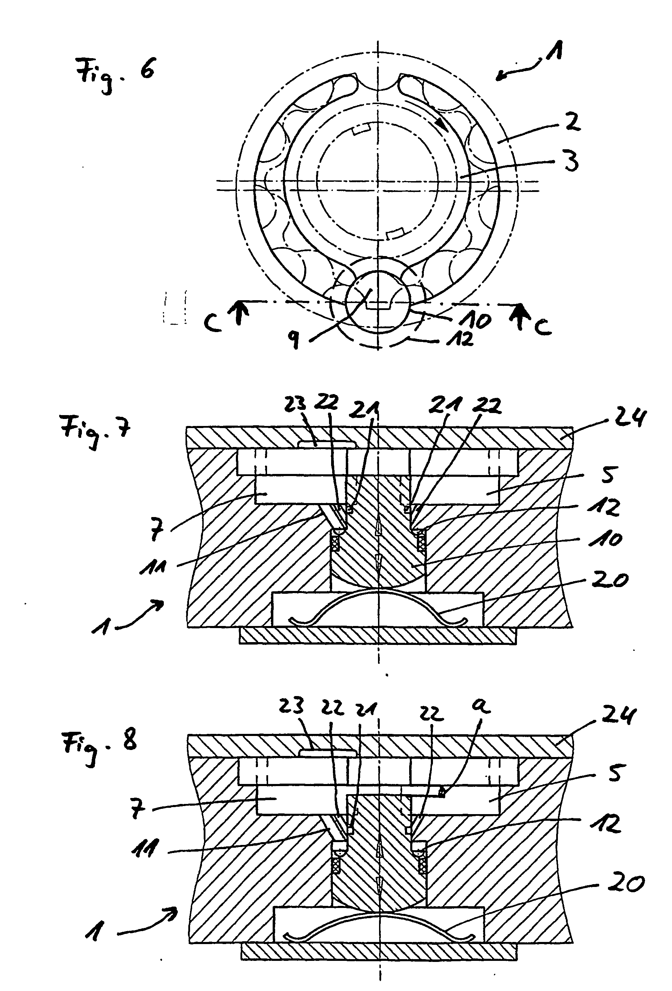

Fig. 8, die ebenfalls einen Schnitt durch die Pumpe 1 entlang der Linie C-C in Fig. 6 zeigt, zeigt den Steuerkolben 10 in einer zurückgezogenen Stellung, wobei Fördermedium von der Drucktasche 7 zur Saugtasche 5 aufgrund des entstandenen Axialspiels a ausgeglichen werden kann. Zusätzlich findet ein Druckausgleich von der Drucktasche 7 zur Saugtasche 5 durch die Bypasskanäle 22 statt, die mit der auf der Außenumfangsfläche des Steuerkolbens 10 angeordneten Ringnut zusammenwirken.

Das Regelverhalten der Pumpe wird weiterhin vorteilhaft dadurch beeinflußt, daß der Gehäusedeckel 24 einen Druckkanal 23 aufweist, der die Drucktasche 7 und die Förderkammer 9 verbindet. Über den in den Gehäusedeckel 24 eingearbeiteten Druckkanal 23 kann die Förderkammer 9 gezielt mit Druck beaufschlagt werden. Der Druckkanal 23 verbindet die Drucktasche 7 mit der Förderkammer 9, wodurch die Förderkammer 9 zum Teil mit Fördermedium aus der Drucktasche 7 aufgefüllt wird, wodurch bei vergrößertem Axialspiel A, d. h. bei einem Zurückziehen des Steuerkolbens 10, das Fördermedium ohne Widerstand in den Saugbereich zurückfließen kann oder gleich im Saugbereich verbleibt. Hierdurch wird nur soviel Fördermedium gefördert, wie nach der Ölschluckkennlinie des Motors benötigt wird.

Um das Regelverhalten der Pumpe noch genauer und gezielter zu beeinflussen, ist es möglich, daß die Druckkanäle 11 und 23 absperrbar bzw. regelbar sind, so daß beispielsweise der Druckkanal 23 bis zu einer bestimmten Drehzahl oder Druck in der Drucktasche 7 geschlossen bleibt und erst anschließend ganz oder teilweise geöffnet wird, um somit einen Druckausgleich von der Drucktasche 7 zur Förderkammer 9 zu erreichen. Weiterhin ist es zweckmäßig, wenn die in den Fig. 4 und 5 sowie 7 und 8 gezeigten Ausgestaltungen der Erfindung auf der dem Steuerkolben 10 gegenüberliegenden Seite angeordnet sind, um eine verbesserte Regelung der Pumpe 1 zu ermöglichen. Beispielsweise kann der zweite Steuerkolben mit einer Feder versehen sein, die eine andere Federkennlinie aufweist als die Feder des ersten Steuerkolbens. Der zweite Steuerkolben kann auch mit einer Feder versehen werden, die so vorgespannt ist, daß der Steuerkolben erst bei einem höheren Druck als dem Grenzdruck des Steuerkolbens der ersten Anordnung wirksam wird.

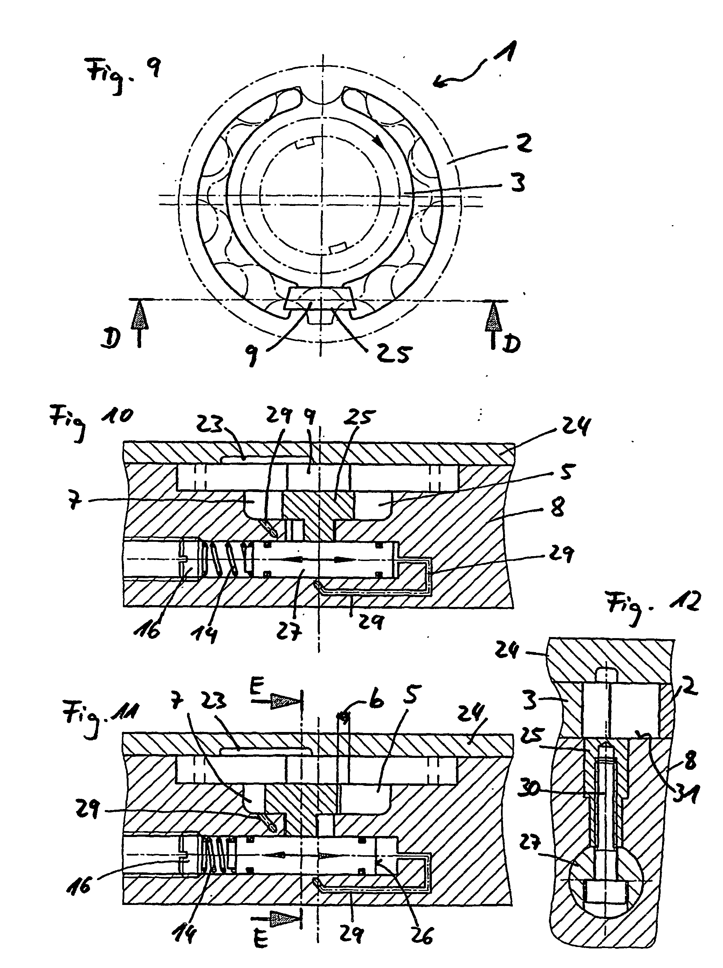

Fig. 9 zeigt eine Draufsicht auf eine Pumpe 1, insbesondere Ölpumpe für Verbrennungsmotoren, mit einem als Gerotor ausgebildeten Rotorsatz, bestehend aus einem Außenrotor 2 und einem Innenrotor 3. Die Förderkammer 9 wird von dem Außenrotor 2 und dem Innenrotor 3 sowie dem Dichtsteg und einem Kulissenstein 25 begrenzt.

Fig. 10 zeigt einen Schnitt durch eine dritte erfindungsgemäße Ausgestaltung einer Pumpe 1, entlang der Linie D-D in Fig. 9 mit geschlossenem Kulissenstein. Die Druck- und Saugtasche 7, 5 sind durch einen eine Förderkammer 9 begrenzenden tangential verschiebbaren Kulissenstein 25 dicht voneinander getrennt. Der Kulissenstein 25 könnte auch radial verschoben werden.

Der Dichtsteg wird zum Teil durch einen Kulissenstein 25 ersetzt. Der Kulissenstein 25 ist beweglich in den Dichtsteg eingearbeitet, wobei in der Ausgangsstellung die Saugtasche 5 von der Drucktasche 7 getrennt ist. Der Kulissenstein 25 ist mit einem rechtwinklig zur Antriebsachse angeordneten Hydraulikkolben 27 verschraubt, wobei durch eine vorgespannte Druckfeder 14, die auf den Hydraulikkolben 27 wirkt, der Grenzdruck eingestellt wird. In der dargestellten Stellung liegt der Druck in der Drucktasche 7 unter dem am Regelpunkt vorliegenden Grenzdruck, so daß der Hydraulikkolben 25 geschlossen ist und kein Spalt b besteht. Der Regelpunkt der Pumpe wird durch eine Druckfeder 14 vorgegeben, die mittels einer Schraube 16 eingestellt werden kann.

Zweckmäßig ist es, wenn die Druckfeder 14 eine degressive Federkennlinie aufweist. Beim Überschreiten des Grenzdrucks wirkt der Druck über das Fördermedium von der Drucktasche 7 durch den Druckregelkanal 29 auf die Stirnfläche des Hydraulikkolbens 27 und bewegt diesen gegen die Federkraft tangential zur Antriebswelle. Hierdurch wird der Kulissenstein 25, der mit dem Hydraulikkolben 27 verbunden ist, tangential von der Saugtasche 5 zur Drucktasche 7 bewegt. Die Förderkammer 9, die durch einen Zahnring- oder Rotorsatz und axial durch den Dichtsteg begrenzt wird, wird durch die tangentiale Bewegung des Kulissensteins 25 von der Saugtasche 5 zur Drucktasche 7 hin mehr oder weniger geöffnet.

Über einen in den Pumpendeckel 24 eingearbeiteten Druckkanal 23, der die Drucktasche 7 mit der Förderkammer 9 verbindet, wird die Förderkammer 9 gezielt mit Druck beaufschlagt. Hierdurch wird die zuvor im Saugbereich gefüllte Förderkammer 9 gezielt mit Fördermedium aus der Drucktasche 7 über den Druckkanal 23 ersetzt, so daß das überschüssige Fördermedium über die durch den Kulissenstein 25 geöffnete Förderkammer 9 ohne Widerstand in die Saugtasche 5 zurückfließen kann, oder gleich im Saugbereich verbleibt. Durch das Verschieben des Kulissensteins 25 wird eine innere Leckage der Pumpe erreicht, wodurch der volumetrische Wirkungsgrad der Pumpe gezielt negativ beeinflußt wird, so daß die Leistungsaufnahme der Pumpe reduziert wird.

Fig. 11 zeigt einen Schnitt durch eine dritte erfindungsgemäße Ausgestaltung einer Pumpe 1, entlang der Linie D-D in Fig. 9 mit geöffnetem Kulissenstein.

Die Druck- und Saugtasche 7, 5 sind durch einen eine Förderkammer 9 begrenzenden radial verschiebbaren Kulissenstein 25 dicht voneinander trennbar. Von der Drucktasche 7 führt ein Druckregelkanal 29 zu der Stirnfläche des Hydraulikkolbens 27. Der Kulissenstein 25 ist in einer ausgelenkten Stellung, so daß ein Spalt b entsteht. Ab einer Grenzdrehzahl, wenn der Grenzdruck in der Drucktasche 7 erreicht wird, wird die Federkraft der Druckfeder 14 überwunden, wobei der Druck des Fördermediums durch den Druckregelkanal 29 auf den Bund 26 des Hydraulikolbens 27 geleitet wird. Zur Abdichtung des Hydraulikkolbens 27 gegen das Gehäuse 8 ist eine Dichtung vorgesehen.

Durch den Spalt b kann Medium von der Drucktasche 7 und von der Förderkammer 9 zur Saugtasche 5 überströmen, wodurch der volumetrische Wirkungsgrad der Pumpe gezielt negativ beeinflußt wird. Durch diese Maßnahme wird es erreicht, daß ab dem Regelpunkt der Druck und der Volumenstrom der Pumpe 1 annähernd konstant über die Drehzahl bleibt, wodurch die Förderkennlinie der Pumpe an die Ölschluckkennlinie eines Motors angenähert wird.

Das Regelverhalten der Pumpe wird weiterhin vorteilhaft dadurch beeinflußt, daß der Gehäusedeckel 24 einen Druckkanal 23 aufweist, der die Drucktasche 7 und die Förderkammer 9 verbindet. Über den in den Gehäusedeckel 24 eingearbeiteten Druckkanal 23 kann die Förderkammer 9 gezielt mit Druck beaufschlagt werden. Der Druckkanal 23 verbindet die Drucktasche 7 mit der Förderkammer 9, wodurch die Förderkammer 9 zum Teil mit Fördermedium aus der Drucktasche 7 aufgefüllt wird, wodurch bei vergrößertem Spalt b, d. h. bei einem Zurückziehen des Kulissensteins 25, das Fördermedium ohne Widerstand in den Saugbereich zurückfließen kann oder gleich im Saugbereich verbleibt. Hierdurch wird nur soviel Fördermedium gefördert, wie nach der Ölschluckkennlinie des Motors benötigt wird.

Fig. 12 zeigt einen Schnitt entlang der Linie E-E in Fig. 11, wobei der Kulissenstein 25 mittels einer Schraube 30 mit dem Hydraulikkolben 27 verschraubt ist. Die Förderkammer 9 wird von dem Kulissenstein 25, dem Dichtsteg 31, dem Außenrotor 2, dem Innenrotor 3 und dem Gehäusedeckel 24 begrenzt. In den Gehäusedeckel 24 ist ein Druckkanal 23 eingearbeitet, der die Drucktasche 7 und die Förderkammer 9 verbindet.

## Patentansprüche

1. Pumpe (1), insbesondere Ölpumpe für Verbrennungsmotoren, mit einem Zahnring- oder Rotorsatz, mit jeweils einer in einem Pumpengehäuse angeordneten Druck- und Saugtasche (7, 5), die durch einen eine Förderkammer (9) begrenzenden axial verschiebbaren Steuerkolben (10) dicht voneinander trennbar sind und einem das Pumpengehäuse (8) verschließenden Gehäusedeckel (24), wobei die Drucktasche (7) einen Druckregelkanal (11) aufweist, der mit dem Bund (12) des Steuerkolbens (10) in Verbindung steht, **dadurch gekennzeichnet, daß** der Steuerkolben (10) an seinem der Förderkammer (9) abgewandten Ende mit einem rechtwinklig zum Steuerkolben (10) angeordneten Federbolzen (13) zusammenwirkt, wobei der Federbolzen (13) mit einer Druckfeder (14) gegen den Steuerkolben (10) vorgespannt ist, und der Steuerkolben (10) und Federbolzen (13) über eine winklig zur Steuerkolbenachse (17) angeordneten Gleitfläche (15) in Verbindung stehen.

2. Pumpe (1) nach Anspruch 1, **dadurch gekennzeichnet, daß** die Gleitfläche (15) als Kurve ausgebildet ist.

3. Pumpe (1), insbesondere Ölpumpe für Verbrennungsmotoren, mit einem Zahnring- oder Rotorsatz, mit jeweils einer in einem Pumpengehäuse (8) angeordneten Druck- und Saugtasche (7, 5), die durch einen eine Förderkammer (9) begrenzenden axial verschiebbaren Steuerkolben (10) dicht voneinander trennbar sind, und einem das Pumpengehäuse (8) verschließenden Gehäusedeckel (24), wobei die Drucktasche (7) einen Druckregelkanal (11) aufweist, der mit dem Bund (12) des Steuerkolbens (10) in Verbindung steht, **dadurch gekennzeichnet, daß** der Steuerkolben an (10) seinem der Förderkammer (9) abgewandten Ende gegen eine Feder (20) mit nicht-linearer Federkennlinie wirkt.

4. Pumpe (1), insbesondere Ölpumpe für Verbrennungsmotoren, nach Anspruch 3, **dadurch gekennzeichnet, daß** die Feder (20) eine degressive Federkennlinie aufweist.

5. Pumpe (1), insbesondere Ölpumpe für Verbrennungsmotoren, nach Anspruch 3 oder 4, **dadurch gekennzeichnet, daß** die Feder (20) als Wippfeder ausgebildet ist.

6. Pumpe (1), insbesondere Ölpumpe für Verbrennungsmotoren, nach Anspruch 3 oder 4, **dadurch gekennzeichnet, daß** die Feder (20) als Tellerfeder ausgebildet ist.

7. Pumpe (1), insbesondere Ölpumpe für Verbrennungsmotoren, nach einem der Ansprüche 1 bis 6, **dadurch gekennzeichnet, daß** der Steuerkolben (10) eine Ringnut (21) aufweist, die in einer zurückgezogenen Stellung mit Bypasskanälen (22) in Verbindung steht, die von der Druck- und Saugtasche (7, 5) ausgehen.

8. Pumpe (1), insbesondere Ölpumpe für Verbrennungsmotoren, nach einem der Ansprüche 1 bis 7, **dadurch gekennzeichnet, daß** der Gehäusedeckel (24) einen Druckkanal (23) aufweist, der die Drucktasche (7) und die Förderkammer (9) verbindet.

9. Pumpe (1), insbesondere Ölpumpe für Verbrennungsmotoren, nach einem der Ansprüche 1 bis 8, **dadurch gekennzeichnet, daß** der Druckregelkanal (11) und/oder der Druckkanal (23) absperrbar oder regelbar sind.

10. Pumpe (1), insbesondere Ölpumpe für Verbrennungsmotoren, nach einem der Ansprüche 1 bis 9, **dadurch gekennzeichnet, daß** der Steuerkolben (10) eine verschleißfeste Oberfläche aufweist.

11. Pumpe (1), insbesondere Ölpumpe für Verbrennungsmotoren, nach einem der Ansprüche 1 bis 10, **dadurch gekennzeichnet, daß** der Bund (12) des Steuerkolbens (10) eine Nut aufweist.

12. Pumpe (1), insbesondere Ölpumpe für Verbrennungsmotoren, mit einem Zahnring- oder Rotorsatz, mit jeweils einer in einem Pumpengehäuse angeordneten Druck- und Saugtasche (7, 5), die durch einen eine Förderkammer (9) begrenzenden radial verschiebbaren Kulissenstein (25) dicht voneinander trennbar sind und einem das Pumpengehäuse (8) verschließenden Gehäusedeckel (24), wobei die Drucktasche (7) einen Druckregelkanal (29) aufweist, der mit dem Bund (26) des Hydraulikkolbens (27) in Verbindung steht, wobei der Hydraulikkolben (27) an seiner der Förderkammer (9) zugewandten Seite mit einem Kulissenstein (25) zusammenwirkt, wobei der Hydraulikkolben (27) mit einer Druckfeder (14) vorgespannt ist.

13. Pumpe (1), insbesondere Ölpumpe für Verbrennungsmotoren, nach einem der Ansprüche 1 bis 12, **dadurch gekennzeichnet, daß** auf jeder Seite des Zahnrings oder Rotorsatzes eine Anordnung mit einem Steuerkolben (10) vorgesehen ist.

## Claims

1. Pump (1), in particular an oil pump for combustion engines, with a toothed-wheel set or rotor set, with respective pressure and suction cavities (7, 5) arranged in a pump housing which can be separated from one another without leakage by an axially displaceable control piston (10) that delimits a delivery chamber (9), and with a housing cover (24) that seals the pump housing (8), the pressure cavity (7) having a pressure regulation channel (11) which communicates with the flange (12) of the control piston (10), **characterised in that** at its end away from the delivery chamber (9) the control piston (10) co-operates with a spring-bolt (13) arranged perpendicularly to the control piston (10), the spring-bolt (13) is pre-stressed against the control piston (10) by a compression spring (14), and the control piston (10) and spring-bolt (13) are in contact via a sliding surface (15) arranged at an angle to the control piston's axis (17).

2. Pump (1) according to Claim 1, **characterised in that** the sliding surface (15) is curved.

3. Pump (1), in particular an oil pump for combustion engines, with a toothed-wheel set or rotor set, with respective pressure and suction cavities (7, 5) arranged in a pump housing (8) which can be separated from one another without leakage by an axially displaceable control piston (10) that delimits a delivery chamber (9), and with a housing cover (24) that seals the pump housing (8), the pressure cavity (7) having a pressure regulation channel (11) which communicates with the flange (12) of the control piston (10), **characterised in that** at its end away from the delivery chamber (9), the control piston (10) acts against a spring (20) with a non-linear spring characteristic.

4. Pump (1), in particular an oil pump for combustion engines, according to Claim 3, **characterised in that** the spring (20) has a degressive spring characteristic.

5. Pump (1) in particular an oil pump for combustion engines, according to Claims 3 or 4, **characterised in that** the spring (20) is made as a deflection-strip spring.

6. Pump (1) in particular an oil pump for combustion engines, according to Claims 3 or 4, **characterised in that** the spring (20) is made as a plate spring.

7. Pump (1) in particular an oil pump for combustion engines, according to any of Claims 1 to 6, **characterised in that** the control piston (10) has a ring groove (21) which, in a retracted position, communicates with bypass ducts (22) coming from the pressure and suction cavities (7, 5).

8. Pump (1) in particular an oil pump for combustion engines, according to any of Claims 1 to 7, **characterised in that** the housing cover (24) has a pressure channel (23) which connects the pressure cavity (7) and the delivery chamber (9).

9. Pump (1) in particular an oil pump for combustion engines, according to any of Claims I to 8, **characterised in that** the pressure regulation channel (11) and/or the pressure channel (23) can be blocked or regulated.

10. Pump (1) in particular an oil pump for combustion engines, according to any of Claims 1 to 9, **characterised in that** the control piston (10) has a wear-resistant surface.

11. Pump (1) in particular an oil pump for combustion engines, according to any of Claims 1 to 10, **characterised in that** the flange (12) of the control piston (10) has a groove.

12. Pump (1) in particular an oil pump for combustion engines, with a toothed-wheel set or rotor set, with respective pressure and suction cavities (7, 5) arranged in a pump housing which can be separated from one another without leakage by a radially displaceable slide-block (25) which delimits a delivery chamber (9), and a housing cover (24) that seals the pump housing (8), the pressure cavity (7) having a pressure regulation channel (29) which communicates with the flange (26) of a hydraulic piston (27), such that at its end facing the delivery chamber (9) the said hydraulic piston (27) co-operates with the said slide-block (25) and the hydraulic piston (27) is pre-stressed by a compression spring (14).

13. Pump (1) in particular an oil pump for combustion engines, according to any of Claims 1 to 12, **characterised in that** an arrangement with a control piston (10) is provided on each side of the toothed-wheel set or rotor set.

## Revendications

1. Pompe (1), en particulier pompe à huile pour des moteurs à combustion interne, avec un ensemble de couronne dentée ou de rotor, avec une poche de refoulement et une poche d'aspiration (7, 5) disposées chacune dans un corps de pompe, qui peuvent être séparées de façon étanche l'une de l'autre par un piston de commande (10) coulissant axialement et limitant une chambre d'alimentation (9), et avec un couvercle de corps (24) fermant le corps de pompe (8), dans laquelle la poche de refoulement (7) présente un canal de régulation de pression (11) qui est en communication avec l'épaulement (12) du piston de commande (10), **caractérisée en ce que** le piston de commande (10) coopère à son extrémité opposée à la chambre d'alimentation (9) avec une tige à ressort (13) disposée perpendiculairement au piston de commande (10), dans laquelle la tige à ressort (13) est précontrainte avec un ressort de pression (14) contre le piston de commande (10), et le piston de commande (10) et la tige à ressort (13) sont en communication par une face de glissement (15) disposée de façon inclinée par rapport à l'axe du piston de commande (17).

2. Pompe (1) selon la revendication 1, **caractérisée en ce que** la face de glissement (15) a une forme courbe.

3. Pompe (1), en particulier pompe à huile pour des moteurs à combustion interne, avec un ensemble de couronne dentée ou de rotor, avec une poche de refoulement et une poche d'aspiration (7, 5) disposées chacune dans un corps de pompe (8), qui peuvent être séparées de façon étanche l'une de l'autre par un piston de commande (10) coulissant axialement et limitant une chambre d'alimentation (9), et avec un couvercle de corps (24) fermant le corps de pompe (8), dans laquelle la poche de refoulement (7) présente un canal de régulation de pression (11) qui est en communication avec l'épaulement (12) du piston de commande (10), **caractérisée en ce que** le piston de commande (10) agit par son extrémité opposée à la chambre d'alimentation (9) contre un ressort (20) avec une caractéristique élastique non linéaire.

4. Pompe (1), en particulier pompe à huile pour des moteurs à combustion interne, selon la revendication 3, **caractérisée en ce que** le ressort (20) présente une caractéristique élastique dégressive.

5. Pompe (1), en particulier pompe à huile pour des moteurs à combustion interne, selon la revendication 3 ou 4, **caractérisée en ce que** le ressort (20) est un ressort basculant.

6. Pompe (1), en particulier pompe à huile pour des moteurs à combustion interne, selon la revendication 3 ou 4, **caractérisée en ce que** le ressort (20) est un ressort à rondelle.

7. Pompe (1), en particulier pompe à huile pour des moteurs à combustion interne, selon l'une quelconque des revendications 1 à 6, **caractérisée en ce que** le piston de commande (10) présente une gorge annulaire (21), qui est en communication en position retirée avec des canaux de dérivation (22), qui partent de la poche de refoulement et de la poche d'aspiration (7, 5).

8. Pompe (1), en particulier pompe à huile pour des moteurs à combustion interne, selon l'une quelconque des revendications 1 à 7, **caractérisée en ce que** le couvercle de corps (24) présente un canal de pression (23), qui relie la poche de refoulement (7) et la chambre d'alimentation (9).

9. Pompe (1), en particulier pompe à huile pour des moteurs à combustion interne, selon l'une quelconque des revendications 1 à 8, **caractérisée en ce que** le canal de régulation de pression (11) et/ou le canal de pression (23) peuvent être bloqués ou régulés.

10. Pompe (1), en particulier pompe à huile pour des moteurs à combustion interne, selon l'une quelconque des revendications 1 à 9, **caractérisée en ce que** le piston de commande (10) présente une surface résistant à l'usure.

11. Pompe (1), en particulier pompe à huile pour des moteurs à combustion interne, selon l'une quelconque des revendications 1 à 10, **caractérisée en ce que** l'épaulement (12) du piston de commande (10) présente une gorge.

12. Pompe (1), en particulier pompe à huile pour des moteurs à combustion interne, avec un ensemble de couronne dentée ou de rotor, avec une poche de refoulement et une poche d'aspiration (7, 5) disposées chacune dans un corps de pompe, qui peuvent être séparées de façon étanche l'une de l'autre par un coulisseau (25) coulissant radialement et limitant une chambre d'alimentation (9), et avec un couvercle de corps (24) fermant le corps de pompe (8), dans laquelle la poche de refoulement (7) présente un canal de régulation de pression (29) qui est en communication avec l'épaulement (26) du piston hydraulique (27), dans laquelle le piston hydraulique (27) coopère par son extrémité orientée vers la chambre d'alimentation (9) avec un coulisseau (25), dans laquelle le piston hydraulique (27) est précontraint avec un ressort de pression (14).

13. Pompe (1), en particulier pompe à huile pour des moteurs à combustion interne, selon l'une quelconque des revendications 1 à 12, **caractérisée en ce qu'**il est prévu sur chaque côté de la couronne dentée ou de l'ensemble de rotor un dispositif avec un piston de commande (10).
